(19) Europäisches Patentamt
European Patent Office
Office européen des brevets

(11) EP 1 340 537 B1

(12) **EUROPEAN PATENT SPECIFICATION**

(45) Date of publication and mention of the grant of the patent:
**23.11.2005 Bulletin 2005/47**

(51) Int Cl.[7]: **B01J 23/10**, B01J 23/83, B01D 53/94

(21) Application number: **03002407.9**

(22) Date of filing: **04.02.2003**

# (54) Catalyst for purifying exhaust gases and exhaust gas purification system

Katalysator und System zur Reinigung von Abgasen

Catalyseur et dispositif pour la purification des gases d'échappement

(84) Designated Contracting States:
**DE ES FR GB IT**

(30) Priority: **22.02.2002 JP 2002046726**
**10.09.2002 JP 2002263573**

(43) Date of publication of application:
**03.09.2003 Bulletin 2003/36**

(73) Proprietor: **Mazda Motor Corporation**
**Aki-gun, Hiroshima 735-8670 (JP)**

(72) Inventors:
- **Yamada, Hiroshi**
**Fuchuo-cho, Aki-gun, Hiroshima 735-8670 (JP)**
- **Miyoshi, Seiji**
**Fuchuo-cho, Aki-gun, Hiroshima 735-8670 (JP)**
- **Takami, Akihide**
**Fuchuo-cho, Aki-gun, Hiroshima 735-8670 (JP)**
- **Okamoto, Kenji**
**Fuchuo-cho, Aki-gun, Hiroshima 735-8670 (JP)**

(74) Representative: **Gossel, Hans K. et al**
**Lorenz-Seidler-Gossel**
**Widenmayerstrasse 23**
**80538 München (DE)**

(56) References cited:
**WO-A-01/14046**
**WO-A-99/26715**
**WO-A-02/089977**
**US-A- 5 883 037**
**US-A- 5 898 014**
**US-A1- 2002 132 732**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 340 537 B1

## Description

### TECHNICAL FIELD

This invention relates to a catalyst for purifying exhaust gases and an exhaust gas purification system.

### BACKGROUND ART

As catalysts for purifying exhaust gases from an engine, so-called lean-NOx catalysts are known. The lean-NOx catalysts absorb NOx (nitrogen oxide) in exhaust gases with a NOx absorber such as Ba in an oxygen-rich atmosphere (during lean burn operation) where the oxygen concentration in the exhaust gases is high. When the oxygen concentration in the exhaust gases is decreased, i.e., during rich burn operation (when the engine combustion condition falls into the vicinity of the ideal air-fuel ratio or becomes richer than the ideal air-fuel ratio), the lean-NOx catalysts release NOx absorbed in the NOx absorber, move it onto precious metal, and cause NOx on the precious metal to react on reduction gases in the exhaust gases, such as HC (hydrocarbon), CO and $H_2$, to reduce and convert NOx into $N_2$ and concurrently oxidize HC and CO which are the reduction gases.

Techniques are also known for containing in such a lean-NOx catalyst an oxygen adsorbent for storing and releasing oxygen through the change in oxidation number. Such an oxygen adsorbent is utilised essentially as an oxygen supply source for oxidising NO contained in exhaust gases in large quantity into $NO_2$ easily absorbable in an NOx absorber.

US-A-5 898 014 to Wu et al. discloses an oxygen adsorbent containing zirconia, a cerium component, a neodymium component and a praseodymium component wherein the proportion of zirconia is 40 to 80%.

Japanese Unexamined Patent Publication No. 9-928 discloses use of a mixed oxide of $CeO_2$ and $ZrO_2$ as well as use of $CeO_2$ as an oxygen adsorbent as mentioned above.

On the other hand, Japanese Unexamined Patent Publication No. 9-313939 discloses that in an engine to be controlled to iterate inversion of the air-fuel ratio (A/F) within the range from the ideal air-fuel ratio of 14.7 to $\pm$1.0, i.e., the range from 13.7 to 15.7 inclusive, a so-called three-way catalyst for exhaust gas purification, including Pd as a catalytic component, ceria as a promoter and a Ce-Pr binary oxide (hereinafter, referring to a mixed oxide containing Ce ions and Pr ions), is supported on a honeycomb carrier so that the catalytic activity of Pd at high temperatures can be enhanced by the action of ceria and the Ce-Pr binary oxide.

The inventors have already developed a lean-NOx catalyst which can enhance its NOx absorption capacity during lean burn operation by containing a high-OSC (oxygen storage capacity) Ce-Pr binary oxide therein. The mechanism of this lean-NOx catalyst is conceivable as follows.

When the oxygen concentration in exhaust gases is decreased (i.e., during rich burn operation), oxygen is actively released as active oxygen from the Ce-Pr binary oxide and the released active oxygen oxidises part of HC in the exhaust gases to activate it, resulting in promotion of NOx reduction. Further, since NOx is thus consumed efficiently during rich burn operation, the NOx absorber recovers its NOx absorption capacity, resulting in enhancement of the NOx absorption capacity during lean burn operation.

On the other hand, NO molecules in the exhaust gases aer oxidised on precious metal of the lean-NOx catalyst to produce reaction intermediates $NO_2^{\delta-}$. Because of increase in the ionisation potential of the NOx absorber due to the Ce-Pr binary oxide, however, the reaction intermediates $NO_2^{\delta-}$ become easy to spill over onto the NOx absorber, resulting in enhancement of the NOx absorption capacity during lean burn operation.

In this connection, prior to description of a NOx absorption mechanism due to the above-described spill-over effect, another NOx absorption mechanism that has been conventionally conceived will be now described. For example, the mechanism for barium carbonate (NOx absorber) is as follows:

Mechanism ① (successive reaction)

$$NO + O_2 \rightarrow NO_2 \qquad \text{① -1 (coefficient omitted)}$$

$$BaCO_3 + 2NO_2 + O_2 \rightarrow Ba(NO_3)_2 + CO_2 \qquad \text{① -2 (coefficient omitted)}$$

The above Mechanism ① states that the ① -1 reaction occurs on precious metal and the resulting $NO_2$ is absorbed in the NOx absorber by the ① -2 reaction. Therefore, it follows that preferable conditions for NO absorption

in this mechanism are that the oxygen adsorbent is likely to cause the ①-1 or ①-2 reaction and that within the temperature range in which NO in the exhaust gases can be absorbed in the NOx absorber, $NO_2$ exists in the exhaust gases at a higher abundance than NO (i.e., $NO_2$ exists stably in that temperature range).

However, the inventors found that even if such preferable conditions were not fulfilled, the existence of an oxygen adsorbent capable of enhancing the ionisation potential of the NOx absorber would increase the NOx absorption capacity and in turn improve NOx conversion efficiency.

The enhancement in the ionisation potential of the NOx absorber by the oxygen adsorbent means that the NOx absorber is increased in required energy to release electrons (required energy to be cationised). In other words, it means that electrons of the NOx absorber are attracted toward the oxygen adsorbent so that the NOx absorber becomes positively charged to a greater extent than may be the case with the NOx absorber alone. If, for example, barium carbonate is used as a NOx absorber, the extent to which Ba is charged positively is increased.

Accordingly, it is necessary to consider a different NO absorption mechanism from Mechanism ①. The mechanism is as follows:

Mechanism ② (spill-over of reaction intermediates)

$$NO \xrightarrow{+1/2\ O_2} \begin{matrix} N\cdots O^{\delta-} \\ O \end{matrix} + BaCO_3 + O_2 \rightarrow Ba(NO_3)_2 + CO_2$$

$$\cdots ② \text{ (coefficient omitted)}$$

This mechanism states that reaction intermediates $NO_2^{\delta-}$ are produced on precious metal and the produced reaction intermediates move (spill over) onto the NOx absorber and are then absorbed therein.

For Mechanism ②, a condition for promoting the reaction efficiently is that the NOx absorber acts to attract the reaction intermediates (short-life intermediates) negatively charged on the precious metal. In this respect, since the oxygen adsorbent in question capable of enhancing the ionisation potential of the NOx absorber allows the NOx absorber to be charged positively to a greater extent than with the NOx absorber alone, the reaction intermediates are likely to be attracted from on the precious metal toward the NOx absorber and spill over. As a result, the NOx absorber enhances its NO absorption capacity, thereby providing improved NOx conversion efficiency.

However, the inventors have found, from further studies on the NO absorption mechanism, that the lean-NOx catalyst containing a Ce-Pr binary oxide decreases the rate of NOx conversion during lean burn operation when the exhaust gas temperature reaches a high temperature of 350°C or more, particularly about 500°C. Also, they have found that when the engine operating mode changes from lean burn to rich burn operation, the rate of NOx conversion is not so high as is expected. Specifically, the following phenomenon arises: At the beginning of change to the rich burn operation, a large amount of NOx is released from the NOx absorber. The NOx release, however, is not caught up with by NOx conversion through the lean-NOx catalyst, resulting in temporarily large amounts of NOx being exhausted as it is unreduced.

In view of the foregoing points, the present invention has an object of solving the problem of deterioration in NOx conversion efficiency at the beginning of change from lean burn to rich burn operation while enhancing the NOx absorption capacity due to spill-over during lean burn operation, particularly enhancing the NOx absorption capacity at high temperatures.

## DISCLOSURE OF THE INVENTION

As the result of studies on the above problems, the inventors have found that at the beginning of change of the engine operating mode from lean burn to rich burn, a large amount of NOx is released from the NOx absorber while a large amount of oxygen is also released from the Ce-Pr binary oxide having a high OSC, in particular, the amounts of NOx and oxygen released are large when the exhaust gas temperature is high, and therefore, the surroundings of precious metal do not reach an expected rich atmosphere (reducing atmosphere) so that NOx reduction is not efficiently promoted.

Further, the inventors have found that if Zr ions are mixed as third metal ions into the Ce-Pr binary oxide, this improves the NOx conversion efficiency during rich burn operation even when the exhaust gas temperature is high,

and additionally enhances the NOx absorption capacity of the NOx absorber during lean burn operation, and based on this finding they have completed the present invention.

More specifically, a first aspect of the present invention is concerned with a catalyst for purifying exhaust gases comprising precious metal, and a NOx absorber for absorbing NOx in the exhaust gases in an oxygen-rich atmosphere in which the oxygen concentration in the exhaust gases is high when the exhaust gases are in a predetermined temperature range (for example, from 170°C to 500°C inclusive), and releasing the absorbed NOx when the oxygen concentration in the exhaust gases in the predetermined temperature range is decreased.

The catalyst is characterised by further comprising a Ce-Zr-Pr mixed oxide (hereinafter, referring to a mixed oxide containing Ce ions, Zr ions and Pr ions).

Such a catalyst can avoid that oxygen is excessively supplied around precious metals when the oxygen concentration in the exhaust gases is decreased, while enhancing the spill-over effects of the reaction intermediates $NO_2^{\delta-}$. This can be conceived as follows.

The OSC of the Ce-Pr binary oxide in the known techniques depends mainly upon the content of Ce ions, and the spill-over effects of the reaction intermediates result from the compounding of Pr ions. On the other hand, the Ce-Zr-Pr mixed oxide according to the present invention contains Zr ions unlike the Ce-Pr binary oxide. The Zr ions, however, do not deteriorate the spill-over effects provided by Pr ions, but act to, conversely, enhance the spill-over effects at high temperatures depending upon their content and concurrently reduce the OSC of the Ce-Zr-Pr mixed oxide to a suitable degree.

Further, though the Ce-Zr-Pr mixed oxide has a lower content of Ce ions effecting on the OSC because of Zr ions additionally contained therein, the OSC is not deteriorated so much. This is probably because the addition of Zr ions increases strain of the crystal structure of the Ce-Zr-Pr mixed oxide and the increased strain advantageously acts on the OSC.

Accordingly, the catalyst according to the present invention can enhance, through spill-over of the reaction intermediates $NO_2^{\delta-}$ provided by the Ce-Zr-Pr mixed oxide, the NOx absorption capacity of the NOx absorber at high exhaust gas temperatures (for example, 400°C to 500°C inclusive) during lean burn operation in which the oxygen concentration in the exhaust gases is high, i.e., can improve lean-NOx conversion efficiency. In addition, even at high exhaust gas temperatures, the catalyst of the present invention can avoid that oxygen is excessively released from the Ce-Zr-Pr mixed oxide when the engine operating mode turns into rich-burn operation so that the oxygen concentration in the exhaust gases is decreased, which is advantageous in putting the surroundings of precious metal into a suitable reducing atmosphere for NOx reduction.

Further, such an improvement of the NOx conversion efficiency at high temperatures means that in lean-burn gasoline engines, the NOx conversion efficiency is not deteriorated so much even if their lean-burn operating range is extended to higher-speed and higher-load side.

In this respect, further description will be made. In the lean-burn operating range, it is necessary that rich-burn operation is made intermittently and for a short time (e.g., several seconds) so that NOx is released from the NOx absorber for NOx reduction, thereby securing the NOx absorption capacity of the NOx absorber.

In known techniques, though use of engine combustion control and turbo-charging can extend the lean-burn operating range to higher-speed and higher-load side, it also invites increased exhaust gas temperature. This creates a problem that the NOx conversion efficiency during lean burn operation is deteriorated and the NOx conversion efficiency during intermittent rich burn operation is also deteriorated. Therefore, there is a limit to extension of the lean-burn operating range to higher-speed and higher-load side, and even engines having the ability to perform lean burn operation do not necessarily have excellent fuel economy.

In contrast, according to the present invention, both the NOx conversion efficiency during lean burn operation and the NOx conversion efficiency during rich burn operation at high temperatures can be enhanced as described above, which is advantageous in improving fuel economy.

As the NOx absorber, a compound (carbonate or oxide) using alkali metal, alkali earth metal, rare earth metal or the like can be employed. As the precious metal; Pt, Rh, Ir or the like can be used. In this point, the below-mentioned forms of the invention are the same.

At least part of the precious metal is preferably carried on the Ce-Zr-Pr mixed oxide.

Accordingly, though oxygen stored in the Ce-Zr-Pr mixed oxide is released as active oxygen when the oxygen concentration in the exhaust gases is decreased (during rich burn operation), the precious metal carried on the Ce-Zr-Pr mixed oxide can promote the reaction between the active oxygen on the precious metal and HC in the exhaust gases. Through this reaction, HC is partially oxidised and activated, NOx reduction reaction is further promoted, and in turn the conversion efficiencies of HC and NOx are improved. On the other hand, since NOx during rich burn operation is efficiently consumed, the NOx absorber recovers its NOx absorption capacity and therefore enhances its NOx absorption capacity during lean burn operation.

At least part of the NOx absorber is preferably carried on the Ce-Zr-Pr mixed oxide.

Though HC in the exhaust gases becomes active by oxygen released from the Ce-Zr-Pr mixed oxide as

described above, the NOx absorber carried on the Ce-Zr-Pr mixed oxide promotes the reaction between HC in active state on the mixed oxide and NOx being released from the NOx absorber, which is advantageous in NOx reduction and HC oxidation. In addition, since the Ce-Zr-Pr mixed oxide effectively acts as a catalyst component for positively charging the NOx absorber to a great extent, this is advantageous in improvement of the NOx absorption capacity due to the spill-over effects as described above.

The lower limit of the predetermined temperature range is preferably not smaller than 450°C.

As will be apparent in inventive examples described later, the Ce-Zr-Pr mixed oxide exhibits a high lean-NOx conversion when the exhaust gas temperature at the catalyst entrance is 450°C or more.

The Ce-Zr-Pr mixed oxide preferably contains Zr at a mass percentage of 2 to 43 inclusive when the mass percentage of Pr is 3 to 10 inclusive.

As will be apparent in the inventive example described later, the Ce-Zr-Pr mixed oxide exhibits a high lean-NOx conversion and rich-NOx conversion when the Ce-Zr-Pr mixed oxide has the above composition and the exhaust gas temperature is 450°C or 500°C.

In this case, if the mass percentage of Zr is below 2, the effect of Zr increasing the NOx conversion is low. Further, if the mass percentage of Zr is over 43, the lean-NOx conversion is decreased. The mass percentage of Zr is more preferably 3 to 20 inclusive.

A second aspect of the present invention is concerned with an exhaust gas purification system comprising: a catalyst for purifying exhaust gases comprising precious metal, and a NOx absorber for absorbing NOx in the exhaust gases in an oxygen-rich atmosphere in which the oxygen concentration in the exhaust gases is high when the exhaust gases are in a predetermined temperature range (for example, from 170°C to 500°C inclusive), and releasing the absorbed NOx when the oxygen concentration in the exhaust gases in the predetermined temperature range is decreased; and emission control means for changing the oxygen concentration in the exhaust gases so that a first period of time during which the NOx absorber absorbs NOx at the increase of the oxygen concentration in the exhaust gases and a second period of time during which the NOx absorber releases the absorbed NOx at the decrease of the oxygen concentration in the exhaust gases are repeated alternately and the second period of time is shorter than the first period of time.

The exhaust gas purification system is characterised in that the catalyst for purifying exhaust gases further comprises a Ce-Zr-Pr mixed oxide.

Accordingly, the Ce-Zr-Pr mixed oxide enhances the ionisation potential of the NOx absorber in the catalyst for purifying exhaust gases. Therefore, during the first period of time during which emission is controlled by the emission control means, NO molecules in the exhaust gases are oxidised on the precious metal to produce reaction intermediates $NO_2^{\delta-}$, so that the reaction intermediates $NO_2^{\delta-}$easily spill over on the NOx absorber, resulting in enhanced NOx absorption capacity during lean burn operation. During the second period of time, NOx is released from the NOx absorber, while oxygen is released from the Ce-Zr-Pr mixed oxide. The amount of oxygen released, however, is not excessive. Therefore, when the oxygen concentration in the exhaust gases is decreased, the surroundings of precious metal are put into a suitable reducing atmosphere for NOx reduction.

Consequently, since NOx reduction for the second period of time is efficiently carried out even at high exhaust gas temperatures, it follows that lean-burn gasoline engines, even if their lean-burn operating range is extended to higher-speed and higher-load side, can avoid large deterioration in the NOx conversion efficiency by emission control that allows a short-time rich burn operation to be intermittently performed. This is advantageous in improvement of fuel economy due to extension of the lean-burn operating range.

The first period of time may be, for example, for 1 to 10 minutes inclusive, and the oxygen concentration during the first period of time may be set at, for example, 4% or more. The second period of time may be, for example, for 0.5 to 10 seconds inclusive, and the oxygen concentration during the second period of time may be set at, for example, 2% or less.

BRIEF DESCRIPTION OF THE DRAWINGS

Figure **1** is a cross-sectional view showing part of a catalyst for purifying exhaust gases according to an embodiment of the present invention.

Figure **2** is a block diagram showing an exhaust gas purification system for an engine using the above catalyst.

Figure **3** is a graph showing the relation between rich-NOx conversion and catalyst entrance gas temperature in reference and Comparative Examples.

Figure **4** is a graph showing the relation between lean-rich average NOx conversion and catalyst entrance gas temperature in reference and Comparative Examples.

Figure **5** is a graph showing the relation between catalyst entrance gas temperature and lean-NOx conversion in

Example 2 and Comparative Example.

Figure **6** is a graph showing the relation between catalyst entrance gas temperature and lean-NOx conversion in Inventive Example 3 and Comparative Example.

Figure **7** is a graph showing the relation between catalyst entrance gas temperature and rich-NOx conversion in Inventive Example 3 and Comparative Example.

Figure **8** is a graph showing the relation between catalyst entrance gas temperature and lean-rich average NOx conversion in Inventive Example 3 and Comparative Example.

Figure **9** is a graph showing the relation between the Zr content of a Ce-Zr-Pr mixed oxide and lean- and rich-NOx conversions at a catalyst entrance gas temperature of 450°C.

Figure **10** is a graph showing the relation between the Zr content of the Ce-Zr-Pr mixed oxide and lean- and rich-NOx conversions at a catalyst entrance gas temperature of 500°C.

DESCRIPTION OF EMBODIMENTS

Hereinafter, Embodiments of the present invention will be described with reference to the drawings.

*Catalyst Structure*

Figure **1** shows the structure of a catalyst **1** for purifying exhaust gases according to an embodiment of the present invention. Specifically, a catalytic layer **3** is formed on the surfaces (channel walls) of a monolithic honeycomb carrier **2** made of cordierite which is a carrier material excellent in thermal resistance.

The catalytic layer **3** includes precious metal, a NOx absorber, a substrate (support material) which supports the precious metal and the NOx absorber thereon, and a binder which binds powders of the substrate together and holds them on the carrier **2**. The substrate is formed from a mixture of active alumina and Ce-Zr-Pr mixed oxide as an oxygen adsorbent. Accordingly, at least part of precious metal is carried on the Ce-Zr-Pr mixed oxide, and at least part of the NOx absorber is also carried to the Ce-Zr-Pr mixed oxide.

Each of the active alumina and the Ce-Zr-Pr mixed oxide is contained in the catalytic layer **3** at a rate of 15g to 300g inclusive per 1L of the carrier. The amount of the precious metal carried may be, for example, about 1g to about 5g per 1L of carrier, while the amount of the NOx absorber carried may be, for example, about 5g to about 80g per 1L of carrier. The amount of impurity contained in the catalytic layer 3 is 1% or less.

Such a catalyst for purifying exhaust gases can be made by mixing active alumina, a Ce-Zr-Pr mixed oxide and a binder together, adding water to the mixture to form a slurry, coating the carrier **2** with the slurry, subjecting the coated carrier **2** to drying and calcining, impregnating the coating layer of the carrier **2** with a solution of precious metal and metallic ingredients of a NOx absorber, and then subjecting the carrier **2** to drying and calcining again.

*Way of Using Catalyst*

As for example shown in Figure **2**, the catalyst **1** for purifying exhaust gases is placed in an emission passage **5** for emitting therethrough exhaust gases of an engine **4** which performs lean combustion, such as an automotive lean burn engine or a direct injection gasoline engine. The position where the catalyst **1** is placed corresponds to a lower section of the engine where the engine is mounted on a vehicle. The catalyst **1**, however, may be placed immediately downstream of an exhaust manifold. Alternatively, a three-way catalytic converter may be placed in the emission passage **5** and the catalyst **1** may be placed downstream of the three-way catalytic converter. The engine **4** may be provided with a turbo charger **6**. A combustion chamber **10** is supplied with a fuel through a fuel injection nozzle **7**. The amount of fuel supplied through the fuel injection nozzle **7** is controlled by an emission control means (fuel injection amount control means) **8** according to the engine operating mode so that lean burn operation and rich burn operation can be selectively carried out. It should be noted that in Figure **2**, the reference numeral **9** denotes an air intake passage.

During lean burn operation, the catalyst **1** acts to absorb NOx contained in exhaust gases with its NOx absorber. On the other hand, during rich burn operation in which the engine combustion condition falls into the vicinity of the ideal air-fuel ratio or the excess air factor $\lambda \leq 1$, the catalyst **1** acts to cause NOx released from the NOx absorber to react with HC, CO and $H_2$ to purify the exhaust gases like a three-way catalytic converter. That is, the catalyst **1** has a lean-NOx reduction effect.

With the use of the catalyst **1**, the oxygen concentration in the exhaust gases during lean burn operation is, for example, within the range from 4-5% to 20% inclusive, while the air-fuel ratio A/F is 16 to 22 inclusive or 18 to 80 inclusive. On the other hand, the oxygen concentration in the exhaust gases during rich burn operation is controlled to be 2.0% or less or to be 0.5% or less.

Further, when the engine continues lean burn operation for a long time, the amount of NOx absorbed in the NOx absorber is saturated so that the catalyst **1** is deteriorated in NOx reduction performance. Therefore, in this embodiment, the emission control means **8** appropriately promotes the release of NOx by controlling emission to repeat a high oxygen concentration condition and a low oxygen concentration condition alternately: for a first period of time the lean burn operation is carried out to increase the oxygen concentration in the exhaust gases, and then, for a second period of time shorter than the first period of time, the rich burn operation is carried out to reduce the oxygen concentration to a relatively low level.

Specifically, the first mode of emission control is to estimate the amount of NOx being absorbed in the catalyst **1** and accordingly change the oxygen concentration in the exhaust gases. More specifically, the amount of NOx being absorbed in the catalyst **1** is estimated based on the distance travelled from the latest NOx release control, the total amount of fuel consumed between the distance and the like, and determination is made about whether or not the estimated amount of NOx being absorbed reaches or exceeds a predetermined value (whether or not NOx is being absorbed excessively). In other words, it is determined whether the first period of time has passed. If the amount of NOx being absorbed reaches or exceeds the predetermined value, the rich burn operation is carried out for 0.5 to 10 seconds inclusive (the second period of time) by augmenting the amount of fuel being supplied to the engine, thereby releasing NOx already absorbed in the NOx absorber.

Further, the second mode of emission control is to repeat, in normal operation of the engine, the first period of time during which the lean burn operation is carried out and the second period of time during which the rich burn operation is carried out alternately. In such a case, for example, the first and second periods of time may be set at 1 to 10 minutes inclusive and 0.5 to 10 seconds inclusive, respectively.

Alternatively, NOx absorbed in the NOx absorber may be released by carrying out the lean burn operation during normal operation of the engine and carrying out the rich burn operation during speed-up.

According to the catalyst **1** described above, the catalytic layer **3** contains a Ce-Zr-Pr mixed oxide as an oxygen adsorbent, and the Ce-Zr-Pr mixed oxide acts to aid NOx absorption of the NOx absorber during the first period of time (lean burn operation).

As described previously, conceivable mechanisms in which NO in exhaust gases is absorbed in the NOx absorber include: Mechanism ① (successive reaction) in which the reaction expressed by Formula ①-1 occurs on precious metal and the resulting $NO_2$ is absorbed in the NOx absorber by the reaction expressed by Formula ①-2; and Mechanism ② (spill-over of reaction intermediates) in which reaction intermediates $NO^{\delta -}$ are produced on precious metal and the produced reaction intermediates move (spill over) onto the NOx absorber and then are absorbed therein, as expressed in Formula ②.

In respect to the latter, the Ce-Zr-Pr mixed oxide has the effect of enhancing the ionisation potential of the NOx absorber, and the NOx absorber is thereby charged positively to a greater extent than if it exists alone. Accordingly, the reaction intermediate $NO_2^{\delta -}$ in Formula ② is likely to be attracted from on the precious metal toward the NOx absorber and spill over. As a result, the NOx absorber enhances its NO absorption capacity, thereby providing improved lean-NOx conversion efficiency.

Further, since the Ce-Zr-Pr mixed oxide is contained at a rate of 15 to 300g inclusive per 1L of the carrier, the above-described action is performed effectively, thereby providing a sufficient lean-NOx reduction capacity.

When the engine operation changes from the first period of time (lean burn mode) to the second period of time (rich burn mode), a large amount of NOx is released from the NOx absorber. Since the Ce-Zr-Pr mixed oxide contains Zr ions, however, its OSC is somewhat lower than that of the Ce-Pr binary oxide. Therefore, even if the exhaust gas temperature is high, it can be avoided that oxygen is released excessively at the beginning of change from first to second period of time, thereby putting the surroundings of precious metal into a suitable reducing atmosphere for NOx reduction.

In addition, since the NOx conversion efficiency during the second period of time (rich burn operation) is improved even at high exhaust gas temperatures in the above manner, lean-burn gasoline engines can extend their lean-burn operating range (though in this operating range, a short-time rich burn operation is intermittently carried out) to a higher-speed and higher-load side without largely deteriorating the NOx conversion efficiency, which is advantageous in improvement of fuel economy.

*Other Embodiments*

The catalytic layer **3** of the catalyst **1** may be a single coating in which a single catalytic layer is formed on the carrier, or may be a double coating having inner and outer catalytic layers. For the double coating, both the coating layers may have the same structure, or only one coating layer may have the same structure as the catalytic layer **3** while the other may be a three-way catalytic layer.

Though the catalyst **1** is intended for gasoline engines in the first-mentioned embodiment, it is applicable to diesel engines. In such a case, if the amount of NOx being absorbed by the NOx absorber is determined to be the predetermined value or more, emission control may be carried out which augments the amount of HC in exhaust gases by carrying out primary fuel injection around the top dead centre during the compression stroke and then carrying out

secondary fuel injection during the expansion stroke or the exhaust stroke, thereby promoting NOx release from the NOx absorber.

*Description about Inventive Examples and Comparative Example*

The effects of the above embodiments will be proved from comparative experiments using Inventive and Comparative Examples.
It should be noted that only inventive example 3 represents an embodiment of the present invention.

<Example 1> (for reference)

γ-alumina, a Ce-Zr-Pr mixed oxide (mass ratio: Ce:Zr:Pr=29:68:3) and an alumina binder were weighed and mixed so that the amounts of γ-alumina, Ce-Zr-Pr mixed oxide and alumina binder carried per 1L of carrier were 160g, 160g and 32g, respectively. Then, ion-exchange water was added to the mixture thereby preparing a slurry.
The slurry was washcoated on a monolithic carrier of cordierite so as to be supported on the carrier by half of its total amount being supported thereon in a manner of immersing the carrier in the slurry, picking it up from the slurry, and then blowing out an excess amount of slurry. Next, the washcoated carrier was dried at a temperature of 150°C over an hour and then calcined at a temperature of 450°C over two hours, thereby forming an inner coating layer. Note that the conditions for the above drying and calcining processes are the same also in drying and calcining processes described later.
The remaining half of the total amount of slurry being supported on the carrier was also washcoated on the carrier and dried and calcined in the same manner, thereby forming an outer coating layer on the inner coating layer.
On the other hand, a nitric acid solution of dinitro-diamine-platinum, an aqueous solution of rhodium nitrate, an aqueous solution of barium acetate, an aqueous solution of potassium acetate, an aqueous solution of strontium acetate; and an aqueous solution of magnesium acetate were weighed and mixed so that the amounts of Pt, Rh, Ba, K, Sr and Mg carried per 1L of the carrier were 3.5g, 0.3g, 30g, 6g, 10g and 10g, respectively, thereby preparing a mixed solution.
The inner and outer coating layers of the carrier were impregnated with the above mixed solution, dried and calcined.
The resultant catalyst had an impurity content of 1% or less. In this respect, the below-mentioned other catalyst examples also obtained the same result.

<Example 2> (for reference)

As a Ce-Zr-Pr mixed oxide, a mixed oxide having a mass ratio of Ce:Zr:Pr = 19:79:2 was employed, and with the exception of this point, a catalyst as Example 2 was prepared in the same conditions and manner as in Example 1.

<Comparative Example>

In place of the above Ce-Zr-Pr mixed oxide, a Ce-Pr binary oxide having a mass ratio of Ce:Pr = 90:10 was employed, and with the exception of this point, a catalyst as Comparative Example was prepared in the same conditions and manner as in Example 1.

<Evaluation Method>

- Measurement of rich-NOx conversion -

Each of the catalysts as the above reference and Comparative Examples was subjected to thermal treatment (aging treatment) in an atmosphere of 900°C for 24 hours.
Then, each catalyst was put in a fixed bed flow reactor. In the reactor, a simulated exhaust gas (gas composition A) having a lean air-fuel ratio (A/F=22) was caused to flow for 60 seconds, and then, another simulated exhaust gas (gas composition B) having a rich air-fuel ratio (A/F=14.5) was caused to flow for 60 seconds. After this cycle was repeated five or more times, measurements were made of the NOx conversion (rich-NOx conversion) for 60 seconds from the time point when the gas composition was changed from the lean air-fuel ratio to the rich air-fuel ratio. The gas compositions A and B are shown in Table 1. The space velocity SV was set at 25,000 $h^{-1}$. The experiments were made under conditions where the temperature of each simulated exhaust gas at the catalyst entrance was varied in the temperature range from 350°C to 500°C inclusive.

Table 1

| | Gas composition A lean | Gas composition B rich |
|---|---|---|
| HC($C_3H_6$) | 4000ppm | 4000ppm |
| CO | 0.15% | 0.15% |
| NO | 250ppm | 250ppm |
| $O_2$ | 7% | 0.5% |
| $CO_2$ | 10% | 10% |
| $H_2$ | 650ppm | 650ppm |

- Measurement of lean-rich average NOx conversion -

Each of the catalysts as the above reference and Comparative Examples was subjected to thermal treatment (aging treatment) in an atmosphere of 900°C for 24 hours. Then, for each catalyst, measurements were made of lean-NOx conversion at each of the catalyst entrance temperatures, and the average of rich-NOx conversion and lean-NOx conversion at each temperature was determined. The lean-NOx conversion is the NOx conversion for 60 seconds from the time point when the gas composition was changed from the lean air-fuel ratio to the rich air-fuel ratio after five or more repetitions of the cycle of the gas compositions A and B.

<Results>

The rich-NOx conversion at each temperature of each catalyst is shown in Figure **3**, and the lean-rich average NOx conversion is shown in Figure **4**.

Reference to Figure **3** shows that at a catalyst entrance temperature of 350°C, Inventive Examples 1 and 2 using Ce-Zr-Pr mixed oxides have substantially the same rich-NOx conversion as Comparative Example using a Ce-Pr binary oxide, but that at catalyst entrance temperatures of 450°C and 500°C, the former examples are higher than the latter. This is probably because the Ce-Zr-Pr mixed oxides release a smaller amount of oxygen at the change from lean burn to rich burn mode than the Ce-Pr binary oxide, and therefore the surroundings of precious metal are promptly put into a suitable reducing atmosphere, resulting in an efficient reduction of NOx released in large amounts from the NOx absorber.

Also, at a temperature of 450°C, Example 2 containing a Ce-Zr-Pr mixed oxide at a mass ratio of Ce:Zr:Pr = 19:79:2 is higher in NOx conversion than Example 1 containing a Ce-Zr-Pr mixed oxide at a mass ratio of Ce:Zr:Pr=29:68:3. This is probably because Example 2 has a smaller amount of Ce ions and therefore a smaller amount of oxygen is released at the change from lean burn to rich burn mode. It should be noted that though Ce-Zr-Pr mixed oxides having a high Zr content were used in the above embodiments, Ce-Zr-Pr mixed oxides having a high Ce content may be used.

Reference to Figure **4** shows that at catalyst entrance temperatures of 450°C and 500°C, Examples 1 and 2 are also higher in lean-rich average NOx conversion than Comparative Example. Specifically, Examples 1 and 2 are not deteriorated so much in lean-NOx conversion compared to Comparative Example, and the NOx absorption capacities of their NOx absorbers during lean burn are as high as that of Comparative Example.

Figure 5 shows lean-NOx conversions of Example 2 with a mass ratio of Ce:Zr:Pr = 19:79:2 and Comparative Example with a mass ratio of Ce:Pr = 90:10. With reference to the figure, it will be noted that at an exhaust gas temperature of 450 °C, Example 2 and Comparative Example have substantially no difference in lean-NOx conversion, but that at 500°C, Example 2 is higher in lean-NOx conversion than Comparative Example.

<Inventive Example 3>

As a Ce-Zr-Pr mixed oxide, a mixed oxide having a mass ratio of Ce:Zr:Pr = 86:4:10 was employed, and with the exception of this point, a catalyst as Inventive Example 3 was prepared in the same conditions and manner as in Inventive Example 1.

Then, for Inventive Example 3, measurements were made of lean-NOx conversion, rich-NOx conversion and lean-rich average NOx conversion in accordance with the evaluation method described previously. The measurement results are shown in Figures **6** to **9** together with the above-described Comparative Example.

In respect of lean-NOx conversion shown in Figure **6**, it is shown that at 350°C, Inventive Example 3 and

Comparative Example do not make much difference, but that at over 400°C, Inventive Example 3 is higher than Comparative Example and is smaller in NOx conversion drop with temperature rise.

In respect of rich-NOx conversion shown in Figure **7**, it is shown that Inventive Example 3 and Comparative Example do not make much difference, but at 450°C, Inventive Example 3 is higher than Comparative Example.

With reference to Figure **8**, it will be noted that a higher lean-NOx conversion of Inventive Example 3 is inflected in that at 400°C or more, Inventive Example 3 is higher in lean-rich average NOx conversion than Comparative Example.

Accordingly, from the results shown in Figures **3** and **7**, it can be said that if a Ce-Zr-Pr mixed oxide containing Zr ions is used, oxygen can be suitably released from the mixed oxide at the change from lean burn to rich burn mode, and therefore NOx can be efficiently reduced, which is notably effected particularly at high temperatures.

Further, from the results shown in Figures **5** and **6**, it can be said that a Ce-Zr-Pr mixed oxide containing Zr ions as in the case of Inventive Example 3 can also improve the ionisation potential of the NOx absorber like Comparative Example, and efficiently spill over reaction intermediates $NO_2^{\delta -}$ produced on precious metal onto the NOx absorber, which is more notably effected particularly at high temperatures than Comparative Example.

Consequently, as shown in Figures **4** and **8**, Inventive Examples have high lean-rich average NOx conversions at high temperatures.

Next, examinations were made of the relation between Zr content (mass percentage) and lean- and rich-NOx conversions of the above Ce-Zr-Pr mixed oxides in both cases of catalyst entrance temperatures of 450°C and 500 °C. The examination results in both cases are shown in Figures **9** and **10**, respectively. These graphs were plotted based on the results of Examples 1 and 2 and inventive example 3 and Comparative Example.

Reference to the case of 450°C in Figure **9** shows that the lean-NOx conversion is highest as in Inventive Examples 3 when the Zr content is low, and then decreased as in Example 1 when the Zr content is increased, but increased again to the same level as in Comparative Example (zero Zr content) when the Zr content is further increased. Though this tendency can also be seen from the case of 500°C shown in Figure **10**, it appears more notably in the case of 450°C.

On the other hand, the rich-NOx conversion, in the case of 450°C shown in Figure **9**, sharply rises as in Inventive Example 3 when Zr is added at a low content, and thereafter tends to rise by easy degrees as the Zr content increases. This tendency can also be seen in the case of 500°C shown in Figure **10**, but the effect of increasing the NOx conversion at low Zr contents is smaller.

It can be seen from Figure **10** that, as shown in subsidiary lines (broken lines), in order to enhance the lean-NOx conversion at a high temperature of about 500°C when the Pr content (mass percentage) of a Ce-Zr-Pr mixed oxide is about 2 to about 10, it is effective to select a Zr content of about 2 to about 43, more preferably about 3 to about 20. Further, it can be said that even such a composition exhibits a relatively high rich-NOx conversion.

As a result, according to the present invention, turbo charger-equipped gasoline engines for performing lean combustion can be said to extend their lean-burn operating range (though in this operating range, a short-time rich burn operation is intermittently carried out) to a higher-speed and higher-load side without largely deteriorating the NOx conversion, which is advantageous in improvement of fuel economy.

**Claims**

1. A catalyst for purifying exhaust gases comprising a NOx absorbent, a precious metal and a support material that supports the precious metal and the NOx absorbent thereon, the NOx absorbent being made of at least one selected from the group consisting of Ba, K, Sr and Mg, absorbing NOx in the exhaust gases in an oxygen-rich atmosphere in which the oxygen concentration in the exhaust gases is high and releasing the absorbed NOx when the oxygen concentration in the exhaust gases is decreased, the precious metal serving as a reduction catalyst of the NOx released from the NOx absorbent, the catalyst **characterized in that** a Ce-Zr-Pr mixed oxide that increases the ionised potential of the NOx absorbent is contained as the support material, and the Zr mass percentage of the Ce-Zr-Pr mixed oxide is 2 to 20 inclusive, while the Pr mass percentage of the Ce-Zr-Pr mixed oxide is 2 to 10 inclusive.

2. An exhaust gas purification system comprising:

   a catalyst for purifying exhaust gases comprising a NOx absorbent, a precious metal and a support material that supports the precious metal and the NOx absorbent provided thereon, the NOx absorbent being made of at least one selected from the group consisting of Ba, K, Sr and Mg, absorbing NOx in the exhaust gases in an oxygen-rich atmosphere in which the oxygen concentration in the exhaust gases is high, and releasing the absorbed NOx when the oxygen concentration in the exhaust gases is decreased, the precious metal serving as a reduction catalyst of the NOx released from the NOx absorbent; and

emission control means for changing the oxygen concentration in the exhaust gases so that a first period of time during which the NOx absorbent absorbs NOx at the increase of the oxygen concentration in the exhaust gases and a second period of time during which the NOx absorbent releases the absorbed NOx at the decrease of the oxygen concentration in the exhaust gases are repeated alternately and the second period of time is shorter than the first period of time,

the exhaust gas purification system **characterized by** further comprising a Ce-Zr-Pr mixed oxide that increases the ionised potential of the NOx absorbent serving as the support material, and the Zr mass percentage of the Ce-Zr-Pr mixed oxide is 2 to 20 inclusive, while the Pr mass percentage of the Ce-Zr-Pr mixed oxide is 2 to 10 inclusive.

## Patentansprüche

**1.** Katalysator zur Reinigung von Abgasen, aufweisend einen NOx-Absorber, ein Edelmetall und ein Trägermaterial, welches das Edelmetall und den NOx-Absorber aufnimmt, wobei der NOx-Absorber aus mindestens einem Element aus der Gruppe bestehend aus Ba, K, Sr und Mg hergestellt ist, NOx in den Auspuffgasen in einer sauerstoffreichen Atmosphäre, in der die Sauerstoffkonzentration in den Auspuffgasen hoch ist, absorbiert, und das absorbierte NOx freisetzt, wenn sich die Sauerstoffkonzentration in den Auspuffgasen vermindert, wobei das Edelmetall als ein Reduktionskatalysator des NOx, das vom NOx-Absorber freigesetzt wird, dient, wobei der Katalysator **dadurch gekennzeichnet ist, dass** ein Ce-Zr-Pr-Mischoxid, welches das ionisierte Potential des NOx-Absorbers erhöht, im Trägermaterial enthalten ist, und dass der Zr-Massenprozentsatz des Ce-Zr-Pr-Mischoxids zwischen einschließlich 2 und einschließlich 20 beträgt, während der Pr-Massenprozentsatz des Ce-Zr-Pr-Mischoxids zwischen einschließlich 2 und einschließlich 10 beträgt.

**2.** Abgasreinigungssystem, aufweisend:

einen Katalysator zum Reinigen von Abgasen, aufweisend einen NOx-Absorber, ein Edelmetall und ein Trägermaterial, welches das Edelmetall und den NOx-Absorber, die darauf bereitgestellt sind, aufnimmt, wobei der NOx-Absorber aus mindestens einem Element aus der Gruppe bestehend aus Ba, K, Sr und Mg hergestellt ist, NOx in den Auspuffgasen in einer sauerstoffreichen Atmosphäre, in der die Sauerstoffkonzentration in den Auspuffgasen hoch ist, absorbiert, und das absorbierte NOx freisetzt, wenn sich die Sauerstoffkonzentration in den Auspuffgasen vermindert, wobei das Edelmetall als ein Reduktionskatalysator des NOx, das vom NOx-Absorber freigesetzt wird, dient; und

Schadstoffbegrenzungsmittel zum Ändern der Sauerstoffkonzentration in den Auspuffgasen, so dass sich eine erste Zeitspanne, während welcher der NOx-Absorber bei der Erhöhung der Sauerstoffkonzentration in den Auspuffgasen NOx absorbiert, und eine zweite Zeitspanne, während welcher der NOx-Absorber bei der Verminderung der Sauerstoffkonzentration in den Auspuffgasen das absorbierte NOx freisetzt, wechselweise wiederholen, und wobei die zweite Zeitspanne kürzer ist, als die erste Zeitspanne,

wobei das Abgasreinigungssystem **dadurch gekennzeichnet ist, dass** es des Weiteren ein Ce-Zr-Pr-Mischoxid, welches das ionisierte Potential des NOx-Absorbers erhöht, aufweist, das als das Trägermaterial dient, und dass der Zr-Massenprozentsatz des Ce-Zr-Pr-Mischoxids zwischen einschließlich 2 und einschließlich 20 beträgt, während der Pr-Massenprozentsatz des Ce-Zr-Pr-Mischoxids zwischen einschließlich 2 und einschließlich 10 beträgt.

## Revendications

**1.** Catalyseur pour purifier les gaz d'échappement, comprenant un absorbant de NOx, un métal précieux et un matériau de support qui supporte le métal précieux et l'absorbant de NOx sur celui-ci, l'absorbant de NOx étant constitué d'au moins un parmi le groupe constitué de Ba, K, Sr et Mg, absorbant les NOx dans les gaz d'échappement dans une atmosphère riche en oxygène dans laquelle la concentration en oxygène dans les gaz d'échappement est élevée et libérant les Nox absorbés lorsque la concentration en oxygène dans les gaz d'échappement est réduite, le métal précieux servant de catalyseur pour la réduction des NOx libérés par l'absorbant de NOx, le catalyseur étant **caractérisé en ce qu'**un oxyde mixte au Ce-Zr-Pr qui augmente le potentiel ionisé de l'absorbant de NOx est contenu en tant que matériau de support, et le pourcentage en masse de Zr de l'oxyde mixte au Ce-Zr-Pr est de 2 à 20 compris, tandis que le pourcentage en masse de Pr de l'oxyde mixte au Ce-Zr-Pr est de 2 à

10 compris.

**2.** Système de purification des gaz d'échappement, comprenant :

un catalyseur pour purifier les gaz d'échappement, comprenant un absorbant de NOx, un métal précieux et un matériau de support qui supporte le métal précieux et l'absorbant de NOx présents sur celui-ci, l'absorbant de NOx étant constitué d'au moins un parmi le groupe constitué de Ba, K, Sr et Mg, absorbant les NOx dans les gaz d'échappement dans une atmosphère riche en oxygène dans laquelle la concentration en oxygène dans les gaz d'échappement est élevée et libérant les Nox absorbés lorsque la concentration en oxygène dans les gaz d'échappement est réduite, le métal précieux servant de catalyseur pour la réduction des NOx libérés par l'absorbant de NOx, et

un moyen de contrôle des émissions pour changer la concentration en oxygène dans les gaz d'échappement de sorte qu'une première période de temps au cours de laquelle l'absorbant de NOx absorbe les NOx pendant l'augmentation de la concentration en oxygène dans les gaz d'échappement et une deuxième période de temps au cours de laquelle l'absorbant de NOx libère les NOx absorbés pendant la réduction de la concentration en oxygène dans les gaz d'échappement, soient répétées en alternance et que la deuxième période de temps soit plus courte que la première période de temps,

le système de purification des gaz d'échappement étant **caractérisé en ce qu'**il comprend en outre un oxyde mixte au Ce-Zr-Pr qui augmente le potentiel ionisé de l'absorbant de NOx servant de matériau de support, et le pourcentage en masse de Zr de l'oxyde mixte au Ce-Zr-Pr est de 2 à 20 compris, tandis que le pourcentage en masse de Pr de l'oxyde mixte au Ce-Zr-Pr est de 2 à 10 compris.

FIG. 1

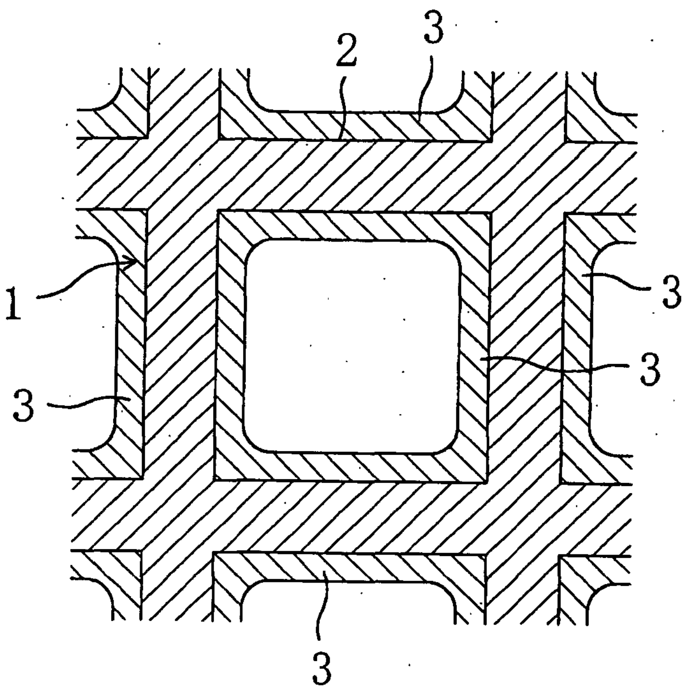

FIG. 2

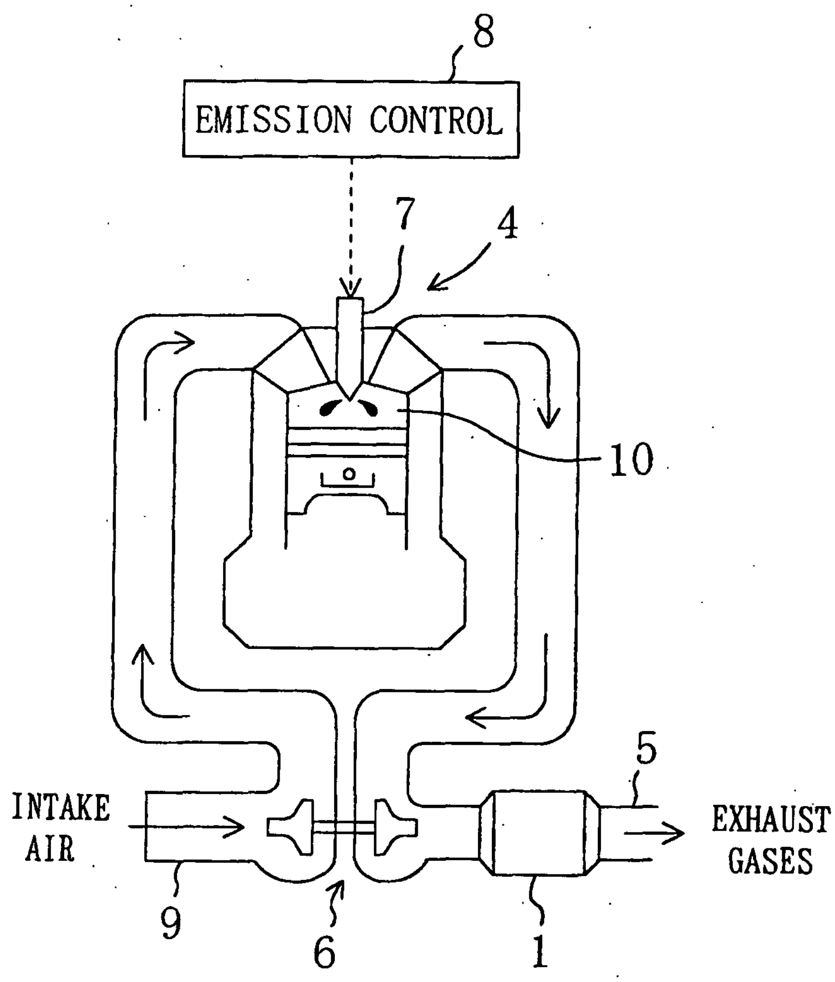

FIG. 3

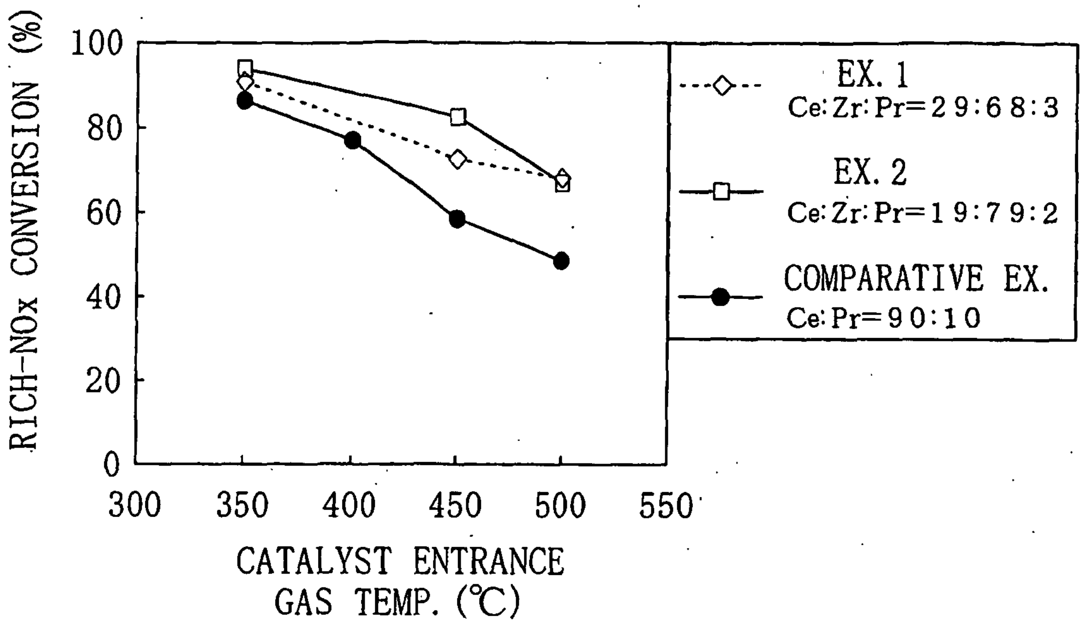
RICH-NOx CONVERSION (%)
100
80
60
40
20
0
300
350
400
450
500
550
CATALYST ENTRANCE
GAS TEMP. (℃)
EX. 1
Ce:Zr:Pr=29:68:3
EX. 2
Ce:Zr:Pr=19:79:2
COMPARATIVE EX.
Ce:Pr=90:10

FIG. 4

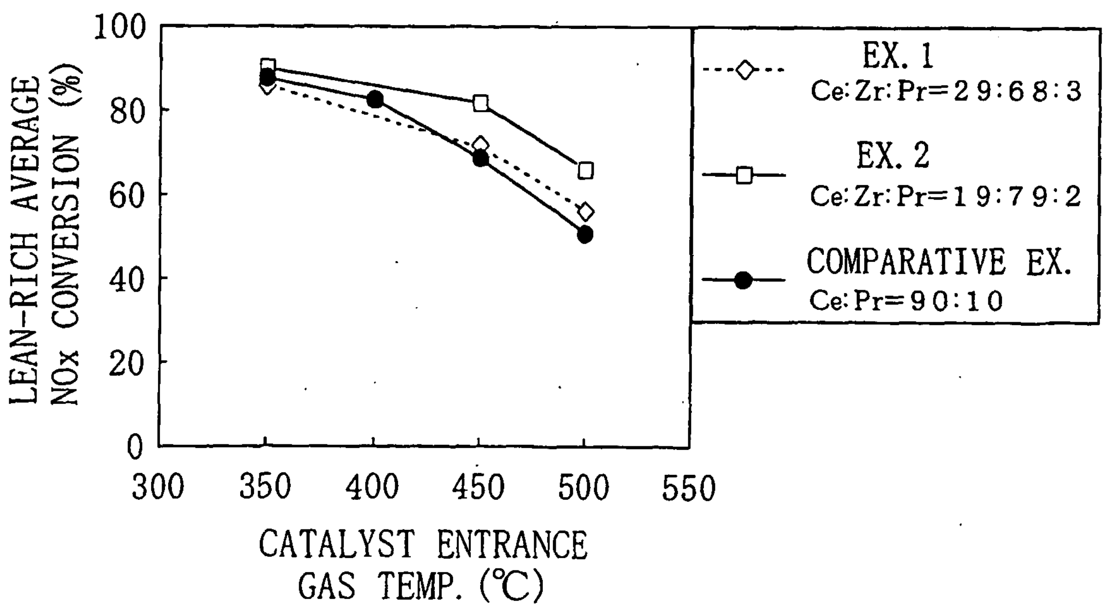
LEAN-RICH AVERAGE
NOx CONVERSION (%)
100
80
60
40
20
0
300
350
400
450
500
550
CATALYST ENTRANCE
GAS TEMP. (℃)
EX. 1
Ce:Zr:Pr=29:68:3
EX. 2
Ce:Zr:Pr=19:79:2
COMPARATIVE EX.
Ce:Pr=90:10

FIG. 5

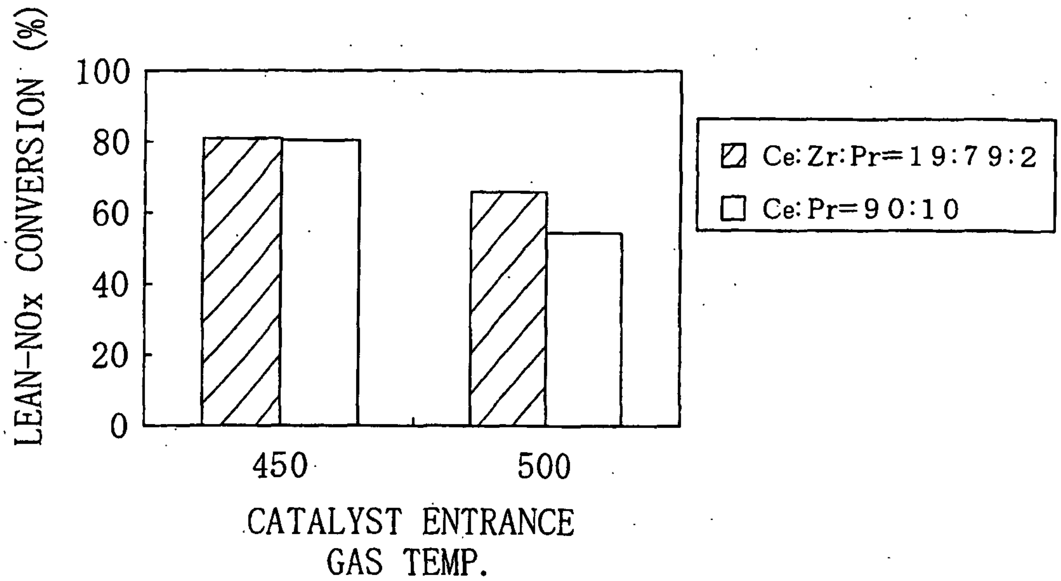
LEAN-NOx CONVERSION (%)
100
80
60
40
20
0
450
500
CATALYST ENTRANCE GAS TEMP.
Ce:Zr:Pr=19:79:2
Ce:Pr=90:10

FIG. 6

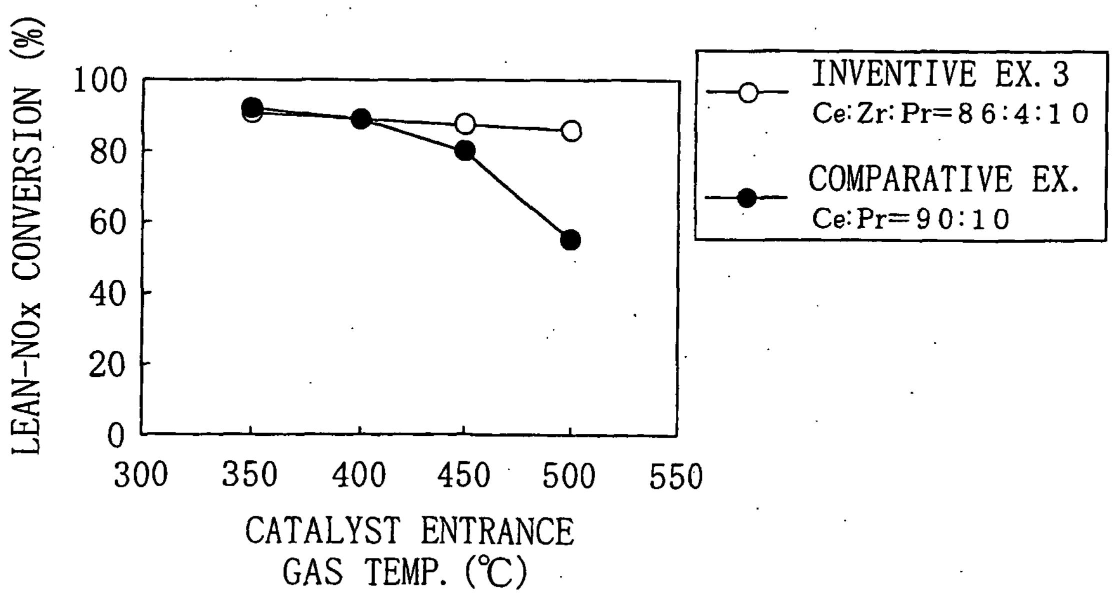
LEAN-NOx CONVERSION (%)
100
80
60
40
20
0
300
350
400
450
500
550
CATALYST ENTRANCE GAS TEMP. (℃)
INVENTIVE EX. 3
Ce:Zr:Pr=86:4:10
COMPARATIVE EX.
Ce:Pr=90:10

FIG. 7

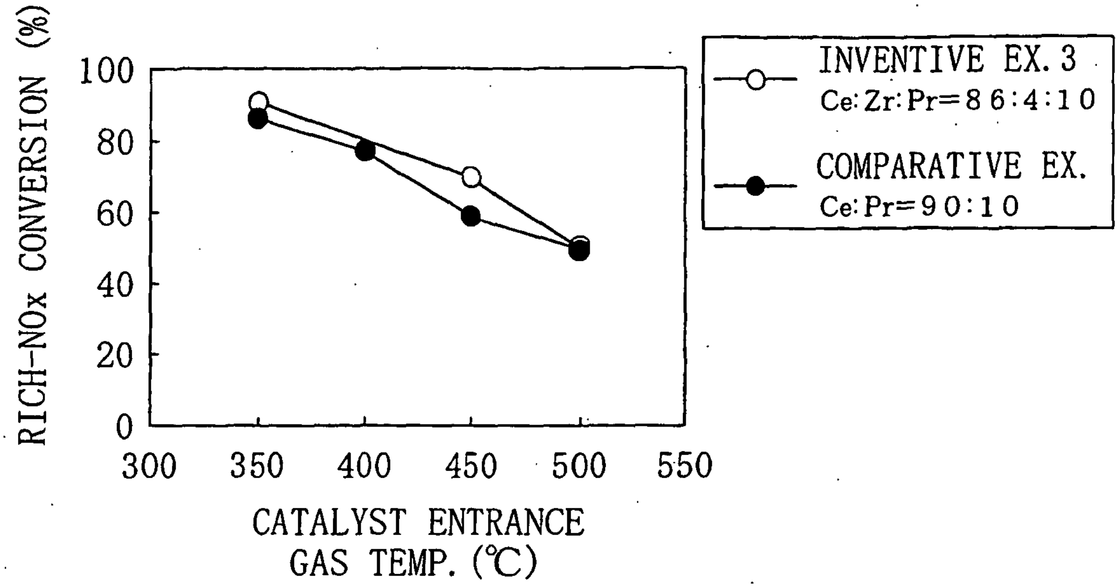
RICH-NOx CONVERSION (%)
100
80
60
40
20
0
300
350
400
450
500
550
CATALYST ENTRANCE
GAS TEMP. (℃)
INVENTIVE EX. 3
Ce:Zr:Pr=86:4:10
COMPARATIVE EX.
Ce:Pr=90:10

FIG. 8

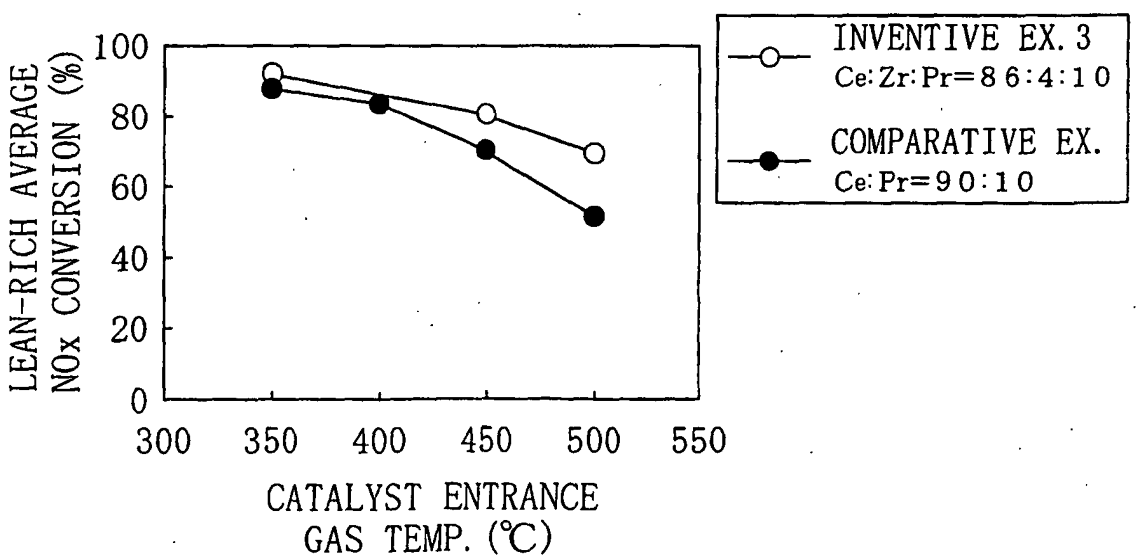
LEAN-RICH AVERAGE
NOx CONVERSION (%)
100
80
60
40
20
0
300
350
400
450
500
550
CATALYST ENTRANCE
GAS TEMP. (℃)
INVENTIVE EX. 3
Ce:Zr:Pr=86:4:10
COMPARATIVE EX.
Ce:Pr=90:10

FIG. 9

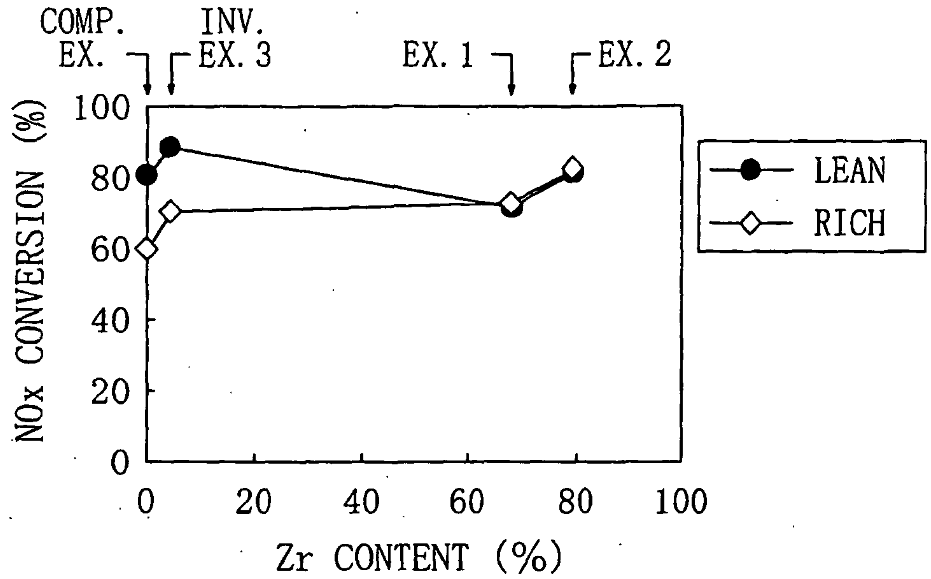
COMP. EX.
INV. EX. 3
EX. 1
EX. 2
NOx CONVERSION (%)
100
80
60
40
20
0
0
20
40
60
80
100
Zr CONTENT (%)
LEAN
RICH

FIG. 10

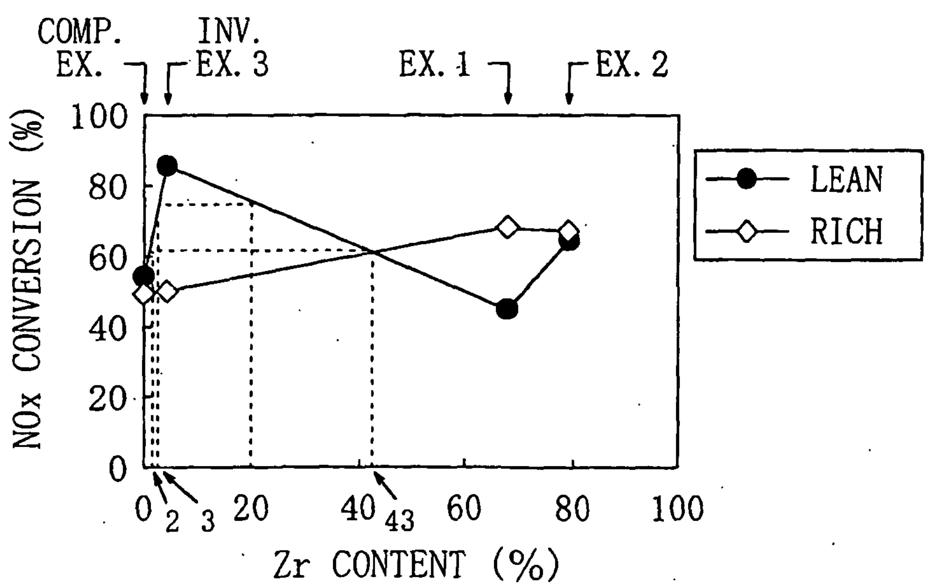
COMP. EX.
INV. EX. 3
EX. 1
EX. 2
NOx CONVERSION (%)
100
80
60
40
20
0
0
2
3
20
40
43
60
80
100
Zr CONTENT (%)
LEAN
RICH